# EUROPEAN PATENT APPLICATION

(11) **EP 1 180 621 A2**
(43) Date of publication of application: **20.02.2002**
(21) Application number: 01117772.2
(22) Date of filing: 01.08.2001
(51) Int. Cl.: F16J 15/08

(54) **Cylinder head gasket with partial resin layer**

(30) Priority: 07.08.2000 JP 2000238762
(71) Applicant: ISHIKAWA GASKET CO. LTD., Tokyo (JP)
(72) Inventor: Udagawa, Tsunekazu, Ichikawa-shi (JP)
(74) Representative: Banzer, Hans-Jörg, Dipl.-Ing.

(57) **Abstract**

A cylinder head gasket (1) for an internal combustion engine is formed of a first metal plate (10) and a second metal plate (20) laminated together. The first and second metal plates have first and second beads (11, 21) laterally spaced apart from each other and facing each other. A resin layer (30) is deposited on the first metal plate to extend continuously from an inner portion to an outer portion relative to the first bead such that the second bead is disposed on the resin layer. The resin layer (30) securely seals between the first and second metal plates while providing compressibility.

## Description

### Background of the Invention and Related Art Statement

The present invention relates to a cylinder head gasket with a partial resin layer formed around a hole to be sealed, and in particular, a separated type cylinder head gasket with the partial resin layer between two metal plates.

A cylinder head gasket for sealing between a cylinder head and a cylinder block is generally formed of one or a plurality of metal plates, and includes holes for cylinder bores, oil holes, water holes, and bolt holes. Also, in order to seal combustion gases generated in the combustion chambers, oil circulating through an oil gallery and water in a water jacket, the gasket includes sealing means, such as beads and seal rings, for providing adequate sealing pressures for the respective holes to be sealed.

Especially, since high temperature and high pressure combustion gases are generated around the holes for the cylinder bores when the engine is operated, sealing around the holes for the cylinder bores is especially important. Therefore, the metal plate superior to mechanical strength and durability is used, and beads for forming main sealing portions are arranged around the holes for the cylinder bores to obtain high sealing characteristics by the beads. Also, in order to protect creep relaxation of the beads, a plate with secondary beads or shims may be laminated over the metal plate, or grommets may be installed around holes to be sealed.

Also, in order to reduce the cost for the cylinder head gasket, there is a separated type or non-folded type gasket, wherein a specific processing to increase cost, such as forming a grommet, a folding portion, a metal reinforce shim or thermal sprayed layer to increase the thickness around the hole to be sealed, is eliminated. In the separated type, beads for the holes for the cylinder bores are formed by press, but the inner ends of the holes for the cylinder bores are separated between the plates, and are simply cut.

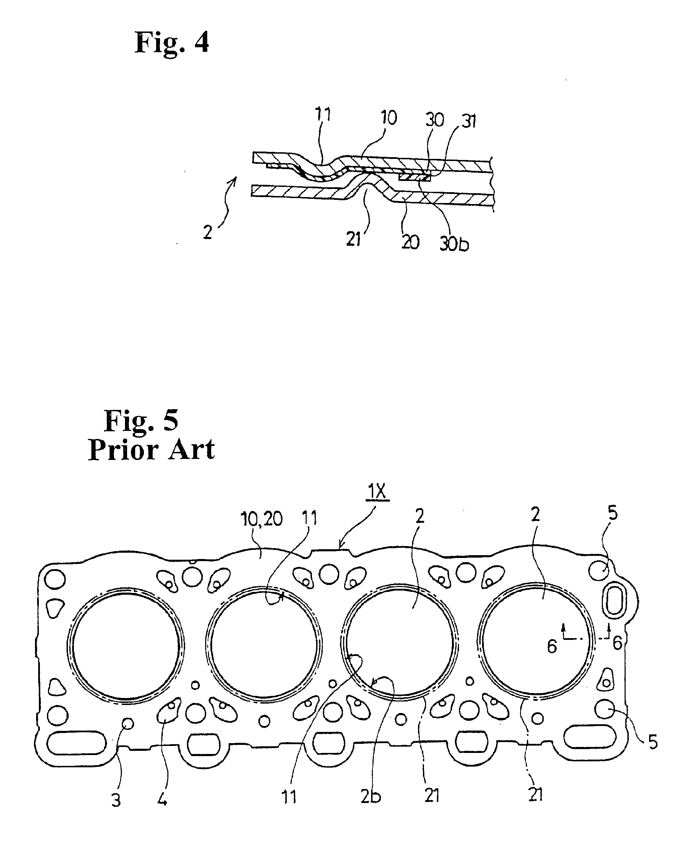

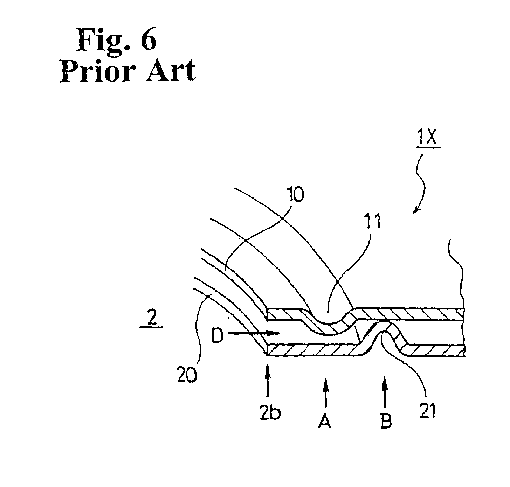

As one of the separated type gasket, there is a cylinder head gasket 1X including a first metal plate 10 with a first bead 11 and a second metal plate 20 with a secondary bead 21, holes 2 for cylinder bores, oil holes 3, water holes 4, and bolt holes 5, as shown in Figs. 5 and 6. The first bead 11 generates a surface pressure to form a seal line A when the gasket is situated between a cylinder head and a cylinder block (both not shown), and is tightened.

When the pressure for the gasket is increased in operating the engine, the secondary bead 21 supports the gasket outside the first bead 11. Thus, the flattening and creep relaxation of the first bead 11 are prevented.

In the gasket 1X, however, there is a problem of leakage of the combustion gas between the plates 10, 20. Namely, since the gasket is the separated type, a space D is formed at the end portion 2b of the hole 2 for the cylinder bore between the first and second plates 10, 20. Although high temperature and high pressure combustion gas entering into the space D is sealed by the first bead 11, since the contact between the first bead 11 and the metal plate 20 and the contact between the second bead 21 and the metal plate 10 are made by metal contacts, small spaces are likely to be formed due to tool marks and repeated vibrations. High pressure and high temperature combustion gas may pass through seal lines A and B at the small spaces on the first bead 11 and second bead 21 to cause leakage.

When the combustion gas leaks and enters into the oil hole 3 and water hole 4 by passing between the plates 10, 20, air inclusion occurs to cause a trouble in circulation of oil and water. This may cause a large engine trouble. Therefore, it is very important to prevent gas leakage.

The present invention has been made to obviate these problems, and an object of the invention is to provide a cylinder head gasket with an improved sealing ability against a combustion gas leakage between a first metal plate with a first bead and a second metal plate with a second bead.

Further objects and advantages of the invention will be apparent from the following description of the invention.

### Summary of the Invention

A cylinder head gasket for an internal combustion engine of the invention is a separated type, which is formed without a grommet or folding a part of a metal plate to close an end of the hole for the cylinder bore. Thus, the holes for the cylinder bores are simply formed by press in the metal plates.

The gasket is basically formed of a first metal plate having a first base portion extending substantially throughout an entire area to be sealed, a first hole formed in the first base portion corresponding to a hole of the engine and a first bead surrounding the first hole, and a second metal plate having a second base portion extending substantially throughout an entire area to be sealed, a second hole formed in the second base portion corresponding to the first hole, and a second head surrounding the second hole. The second metal plate is disposed over the first metal plate such that the first bead faces the second base portion and the second bead faces the first base portion.

In the gasket of the invention, a resin layer is deposited on the first metal plate to extend continuously from an inner portion to an outer portion relative to the first bead such that the second bead can contact the resin layer.

The resin layer may have, according to the object of regulating the surface pressure, an equal thickness or unequal thickness. In case of the unequal thickness, the resin layer may have one layer with different thicknesses, or have a plurality of layers so that the thickness is changed by the number of the layers.

In the cylinder head gasket, the resin layer is formed between the first bead and the second base portion, and between the second bead and the first base portion. Therefore, the resin layer improves the sealing ability between the metal plates.

The resin layer is softer than a metal shim and harder than a rubber coating, so that it operates as an absorbing material. Therefore, the damage and creep relaxation of the first and second beads are protected.

Since the resin layer forms a step portion outside the second bead, which forms a third seal line, the sealing ability for the combustion gas is further improved.

Incidentally, it is difficult to fix a metal shim to cover the first bead, and a thermal sprayed shim is not good for accurate processing and is costly. Even if the thermal sprayed shim is formed, since metal is harder than the resin layer, it can not provide good sealing ability. Also, the shim can not operate as an absorbing material.

Also, in case a material, such as gum layer softer than the resin layer is used, the material may flow or break in use by pressure. Therefore, it can not provide the sealing function nor absorbing ability. Also, since the soft material can not provide a step because of excessive softness, the third sealing line can not be formed outside the second bead.

In the above gasket, the resin layer has the hardness of F to 6H in pencil hardness. If the resin layer is softer than F in pencil hardness, the resin layer may flow or break by pressure and can not provide a step. If the resin layer is harder than 6H in pencil hardness, the sealing and absorbing abilities become bad. Therefore, the resin layer is formed to have the hardness of F to 6H in pencil hardness.

In the gasket of the invention, the resin layer may be epoxy resin, phenol resin, phenoxy resin, fluoroplastics and polyamideimido, or combination thereof. Although the resin layer may be formed of various resins, it is preferable to use epoxy resin, phenol resin, phenoxy resin, fluoroplastics and polyamideimido in view of hardness and easy application. Especially, the phenoxy resin has heat resistance over 200 _{°}C, and in view of working ability and physical characteristics in coating, it is most preferable to use the phenoxy resin.

In the invention, the resin layer is applied by screen printing. Although the resin layer around the hole for the cylinder bore may be formed by spraying using a mask, the resin layer can be easily formed even in a complicated shape if the screen printing is used. Further, by multiple printings, the layer can be formed easily with different thicknesses. Thus, it is possible to easily form the resin layer with adequate thickness according to the position thereof. Also, it is possible to have a multiple structure with different materials by the multiple printings.

The gasket of the invention may be formed only by the first and second plates, and have one or more additional plates in addition to the first and second plates. Also, the gasket may have additional resin layer or gum coating in addition to the resin layer explained above.

### Brief Description of the Drawings

Fig. 1 is a plan view of a first embodiment of a cylinder head gasket with multiple cylinders of the invention;
Fig. 2 is an enlarged sectional view taken along line 2-2 in Fig. 1;
Fig. 3 is a sectional view, similar to Fig. 2, of a second embodiment of the invention;
Fig. 4 is a sectional view, similar to Fig. 2, of a third embodiment of the invention;
Fig. 5 is a plan view of a conventional cylinder head gasket; and
Fig. 6 is an enlarged sectional view taken along line 6-6 in Fig. 5.

### Detailed Description of Preferred Embodiments

Now, the specific embodiments of the invention will be explained with reference to the drawings. Incidentally, the drawings schematically show the structure of a bead and a resin layer, and do not precisely show the thickness, width, height and ratio of the metal plate, bead and resin layer.

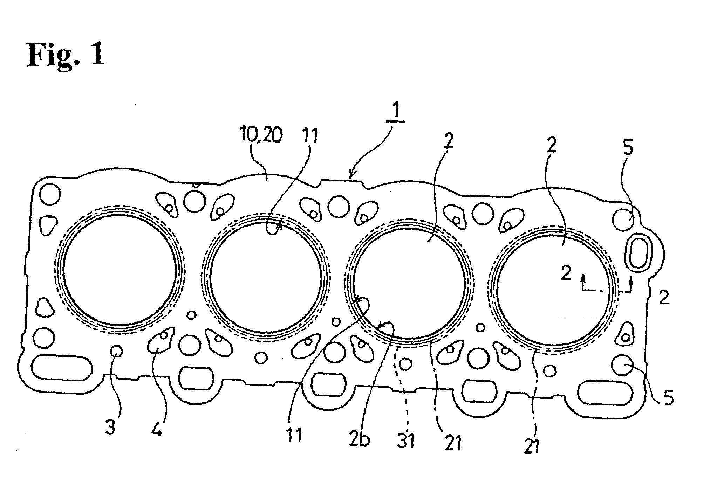

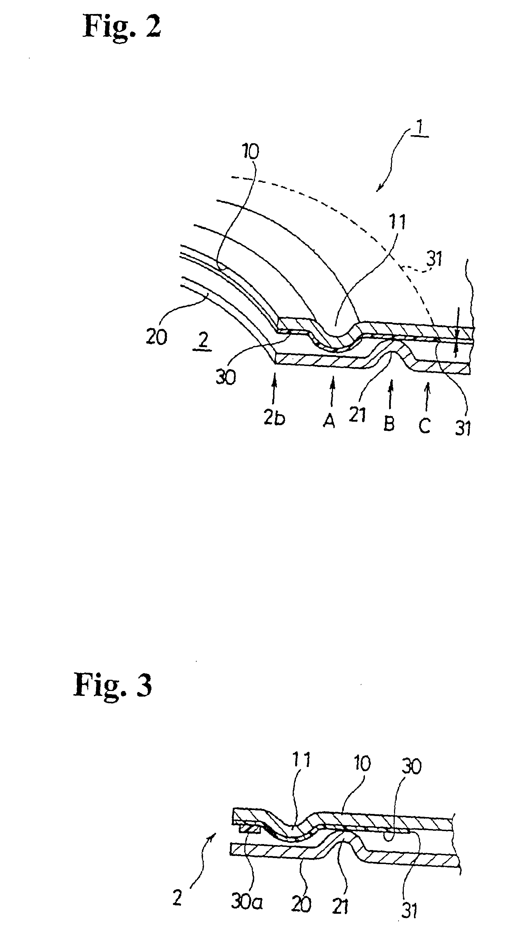

As shown in Figs. 1 and 2, a cylinder head gasket 1 is designed to seal between a cylinder head and a cylinder block (both not shown), and is structured by a first metal plate 10 and a second metal plate 20, which are laminated together and made of metal superior to mechanical strength and durability. The gasket 1 includes holes, such as holes 2 for cylinder bores, oil holes 3, water waters 4, and bolt holes 5.

In the gasket 1, in order to reduce the manufacturing cost by reducing the working steps and using material, the edge portions for the holes 2 for the cylinder bores and so on are simply cut. Namely, the gasket is a separated type at the edges of the holes without forming folding portions or mounting grommets.

As the materials for the first and second metal plates 10, 20, hard metal, such as soft steel plate, stainless steel plate and spring plate, or ductile metal, such as copper and aluminum plates, may be used.

In order to seal around the holes 2 for the cylinder bores, first beads 11 are formed entirely around peripheries 2b of the holes 2 of the cylinder bores to form main seal portions as first seal lines A.

In order to protect the first bead 11 from creep relaxation, as shown in Fig. 2, the second metal plate 20 is laminated over the first metal plate 10 at the projection side of the first bead 11. The second metal plate 20 has second beads 21 outside the first beads 11. The second bead 21 and the first bead 11 are oriented in the directions to face each other between the plates 10, 20.

Further, a resin layer 30 is formed to cover the first bead 11 continuously from the inner side of the first bead 11 to the outer side of the second bead 21. Namely, the resin layer 30 has an inner end inside the first bead 11, and an outer end 31 outside the second bead 21 to have an annular shape with a hole therein. The resin layer 30 has a hardness of F-6H in pencil hardness, and is formed of epoxy resin, phenol resin, phenoxy resin, fluoroplastics or polyamideimido, which is applied by screen printing. In view of working ability and physical characteristics of the coating, phenoxy resin may be preferably used.

The resin layer 30 is formed to have the hardness and thickness such that when the resin layer is compressed, the resin layer is deformed, but not damaged. As an example, although the size the gasket depends on the size of the engine, the thickness of each of the first and second metal plates 10, 20 is 150-500 µm; the diameter of each hole 2 for the cylinder bore is 80 mm; the space between the first and second metal plates 10, 20 is 1-1.5 mm; and the thickness of the resin layer 30 is 5-150 µm.

The resin layer 30 need not have equal thickness, and may have different thickness according to the necessity. Figs. 3 and 4 show that the resin layer 30 is formed of several layers to have different thickness. Namely, in Fig. 3, in order to increase the sealing ability inside the first bead 11, a resin layer 30a is disposed on the resin layer 30 to increase the thickness at the peripheral portion of the hole 2 for the cylinder bore. In Fig. 4, in order to increase the surface pressure at the third seal line C, a resin layer 30b is disposed on the resin layer 30 to thereby increase the thickness at the outer end 31 of the resin layer 30.

In regard to the ends of the resin layer 30, the inner end may be aligned with the end of the hole 2 for the cylinder bore, or may be disposed outside the end of the hole 2. In case a plurality of resin layers is formed, the outer layer 30a, 30b may be aligned with the edge of the lower layer 30 or located away from the edge of the lower layer stepwisely. The width, location and thickness of the resin layer 30 are determined adequately based on the surface pressure distribution required in the head gasket.

In regard to the sealing of oil circulating through the oil gallery and water of the water jacket, sealing means, such as beads, for forming appropriate sealing pressure may be formed around oil holes 3 and water holes 4.

Also, a surface coating may be applied on the entire surfaces of the gasket 1. As the surface coating, it is preferable to have good durability and heatproof property relative to the combustion gas and liquid, i.e. oil and water, to be sealed, and also have softness and recovery ability for the compressing deformation. The material may be a rubber type material, such as NBR gum, fluorine rubber, silicone rubber, hydrogen added nitrilebutadiene rubber.

In case the rubber type material is used, since the material has resiliency, a tool mark and so on formed on the cylinder head and the cylinder block can be absorbed.

In the gasket 1 as stated above, the sealing ability between the plates can be increased, and the durability of the first and second beads can be improved by the absorbing ability of the resin layer.

Namely, the first bead 11 is compressed between the cylinder head and the cylinder block when tightened, to thereby compressingly abut against the second metal plate 20 through the resin layer 30. Thus, the sealing surface pressure is generated to form the first seal line A.

When the compressing force is increased as the operation of the engine, the outer portion of the first bead 11 abuts against the top portion of the second bead 21 through the resin layer 30, so that the compressing force is partly supported. Thus, the excessive flattening of the bead 11 is avoided to prevent creep relaxation of the bead 11. Also, the second bead 21 forms the second seal line B.

Further, the third seal line C is formed at the step portion of the outer end 31 of the resin layer 30.

Accordingly, in the cylinder head gasket 1 of the invention, three seal lines A, B and C are formed. Also, since the first and second metal plates 10, 20 contact through the resin layer 30 with the appropriate hardness, in addition to the sealing property outside the gasket 1, very high sealing ability can be obtained between the first and second metal plates 10, 20.

Also, since the resin layer 30 is softer than a metal shim and harder than a rubber coating, the resin layer 30 operates as an absorbing material. Therefore, creep relaxation and damages of the first and second beads 11, 21 are prevented, and durability is improved.

Also, the resin layer 30 can be formed easily by screen printing or spraying using a mask. Thus, the management of the material and processing can be easily made, so that the increase of the manufacturing steps and the cost is small.

Since the resin layer has the hardness of F-6H in pencil hardness, the resin layer does not flow nor break. Thus, it is possible to establish the sealing ability and absorbing property.

## Claims

1. A cylinder head gasket (1) for an internal combustion engine having a hole to be sealed, comprising:
a first metal plate (10) having a first base portion extending substantially throughout an entire area to be sealed, a first hole (2) formed in the first base portion corresponding to the hole of the engine and a first bead (11) surrounding the first hole,
a second metal plate (20) having a second base portion extending substantially throughout an entire area to be sealed, a second hole (2) formed in the second base portion corresponding to the first hole, and a second bead (21) surrounding the second hole, said second metal plate being disposed over the first metal plate such that the first bead faces the second base portion and the second bead faces the first base portion, and
a coating deposited on the first metal plate,
said cylinder head gasket being **characterized in that** a resin layer (30) is deposited on the first metal plate (10) to extend continuously from an inner portion to an outer portion relative to the first bead (11) such that the second bead (21) is disposed on the resin layer.

2. A cylinder head gasket (1) according to claim 1, wherein said resin layer (30) has heatproof characteristic and compressibility to securely seal between the first and second metal plates.

3. A cylinder head gasket (1) according to claim 1 or 2, wherein said resin layer (30) has a hardness of F to 6H in pencil hardness.

4. A cylinder head gasket (1) according to any one of claims 1 to 3, further comprising an additional resin layer (30a, 30b) to be disposed on the resin layer to increase surface pressure thereat.

5. A cylinder head gasket (1) according to claim 4, wherein said additional resin layer (30a, 30b) is disposed partly on the resin layer (30) at the inner portion or the outer portion.

6. A cylinder head gasket (1) according to any one of claims 1 to 5, wherein said resin layer (30) is selected from the group consisting of epoxy resin, phenol resin, phenoxy resin, fluoroplastics and polyamideimido.
